# EUROPÄISCHE PATENTSCHRIFT

(11) **EP 4 407 132 B1**
(45) Veröffentlichungstag und Bekanntmachung des Hinweises auf die Patenterteilung: **20.05.2026**
(21) Anmeldenummer: 24153662.2
(22) Anmeldetag: 24.01.2024
(51) Int. Cl.: E05D 15/26, E05D 15/40, F16B 12/14

(54) **MÖBEL**
FURNITURE
MEUBLE

(30) Priorität: 24.01.2023 DE 202023100322 U
(43) Veröffentlichungstag der Anmeldung: 31.07.2024
(73) Patentinhaber: FLAP Competence Center kft, 1184 Budapest (HU)
(72) Erfinder: BENDEFY, András, 2083 Solymár (HU)
(74) Vertreter: Neumann Müller Oberwalleney Patentanwälte PartG mbB

(56) Entgegenhaltungen:
- EP-A1- 3 401 476
- EP-B1- 2 751 362
- WO-A1-2017/059471
- WO-A1-2018/158155
- WO-A1-2018/204941
- WO-A1-2019/134936
- WO-A2-2022/255973
- DE-A1- 2 344 635
- DE-U- 1 889 146
- US-A- 3 224 035

## Beschreibung

Die Erfindung betrifft ein Möbel mit den Merkmalen des Oberbegriffs des Anspruchs 1.

Beschläge zum Führen bewegbarer Möbelteile werden heute über selbstschneidende Holzschrauben an dem Möbelkorpus befestigt. Hierbei kommt es beim Eindrehen der Holzschrauben in den Möbelkorpus zu einer erheblichen Schwächung der Struktur des Möbelkorpus. Zudem wird bei falscher Anzugskraft der Holzschrauben Material aus dem Möbelkorpus herausgerissen.

WO 2019/134936 A1 zeigt ein Möbel der eingangs genannten Art und offenbart eine Seitenwand eines Möbelkorpus mit einem integrierten Montageelement zur Aufnahme eines Beschlags für bewegbare Möbelteile. Das Montageelement weist einen Boden und an zumindest zwei Seiten des Bodens von diesem abstehende Seitenabschnitte auf, wobei das Montageelement in eine Aussparung der Seitenwand eingesetzt ist. Zumindest der Boden des Montageelements ist kraftschlüssig oder stoffschlüssig mit einer Gegenfläche der Aussparung verbunden. Das Montageelement weist Montagebolzen zu Befestigung des Beschlags auf. Hierzu wird der Beschlag mit Durchgangslöchern auf die Montagebolzen aufgesteckt und über Schrauben gesichert.

WO 2017/059471 A1 zeigt einen Möbelbeschlag mit einem Flansch zur Anlage an einem Möbelteil. Eine Befestigungsvorrichtung dient zur Befestigung des Möbelbeschlages mittels des Flansches am Möbelteil. Die Befestigungsvorrichtung weist zwei in einer zylindrischen Bohrung des Möbelteiles einsetzbare Befestigungselemente sowie zumindest ein drehbar gelagertes Arretierelement auf.

Die beiden Befestigungselemente werden durch Drehen des Arretierelementes relativ zueinander und relativ zum Flansch gespreizt, sodass die bieden Befestigungselemente in der Öffnung arretiert werden.

US 3 224 035 A offenbart ein Möbelscharnier und ein im Möbel integriertes metallisches Gewindeelement.

Der vorliegenden Erfindung liegt die Aufgabe zugrunde, ein Möbel bereitzustellen, dass eine dauerhaft sichere Montage des Beschlages an dem Möbelkorpus ermöglicht.

Die Aufgabe wird durch ein Möbel mit den Merkmalen des Anspruchs 1 gelöst.

Das Beschlaggehäuse ist somit mit einer Seitenwand des Möbelkorpus über das Schraubelement verspannt.

In einer möglichen Ausführungsform kann die Seitenwand eine Ausnehmung umfassen, in der das Beschlaggehäuse eingesetzt ist.

Das Beschlaggehäuse ist auf einer Innenseite des Möbelkorpus angeordnet.

Das Beschlaggehäuse weist eine Durchgangsöffnung auf. Das Gegengewinde ist in die Seitenwand integriert, wobei ein Gewindeelement mit dem Gegengewinde in die Seitenwand eingesetzt ist. Das Schraubelement ist durch die Durchgangsöffnung erstrecken und greift mit dem Gewinde in das Gegengewinde des Gewindeelements ein. Mit einem zweiten Ende, das dem ersten Ende entgegengesetzt ist, stützt sich das Schraubelement an dem Beschlaggehäuse ab.

Das Gewindeelement ist in einem Durchbruch oder einer Ausnehmung der Seitenwand angeordnet.

Das Gewindeelement ist so angeordnet, dass die Innenseite der Seitenwand von diesem durchdrungen wird und das Gewindeelement von der Innenseite der Seitenwand hervorsteht. Mit anderen Worten weist das Gewindeelement einen Abschnitt auf, der außerhalb des Durchbruchs respektive der Ausnehmung angeordnet ist und von der Seitenwand hervorsteht.

Nachfolgend werden mögliche Ausführungen eines erfindungsgemäßen Möbels anhand der Figurenzeichnungen erläutert. Hierin zeigt:
- Figur 1: eine perspektivische Ansicht eines Möbels;
- Figur 2: einen Querschnitt durch die Seitenwand des Möbels aus Figur 1 in einer nicht erfindungsgemäßen Ausführungsform;
- Figur 3: eine Ansicht analog zu Figur 2 für ein erfindungsgemäßes Möbel in einer ersten erfindungsgemäßen Ausführungsform; und
- Figur 4: eine Ansicht analog zu Figur 2 für ein erfindungsgemäßes Möbel in einer zweiten erfindungsgemäßen Ausführungsform.

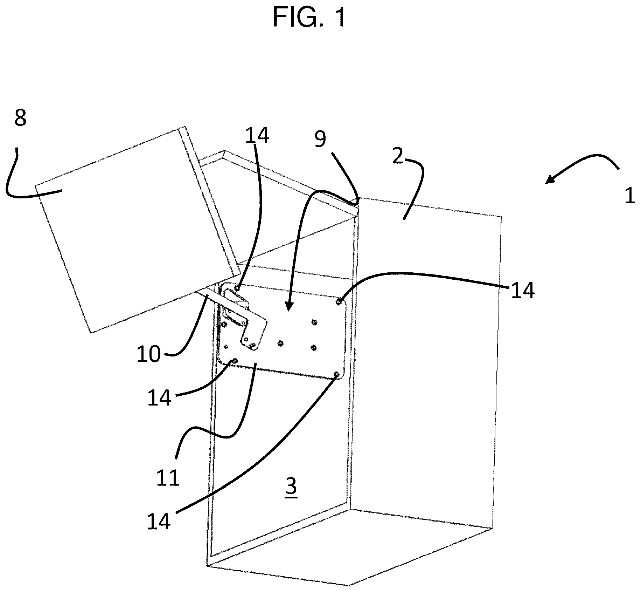

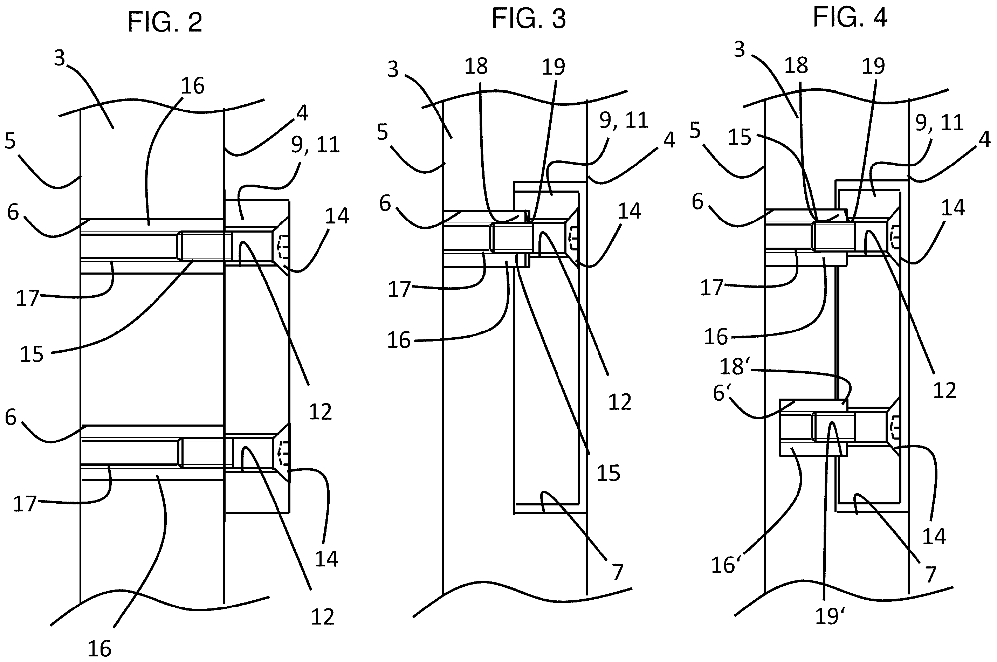

In den Figuren 1 und 2, die nachfolgend gemeinsam beschrieben werden, ist ein Möbel 1 dargestellt. Das Möbel 1 umfasst einen Möbelkorpus 2 mit zwei Seitenwänden 3, die über einen Oberboden und einen Unterboden miteinander verbunden sind. Der Möbelkorpus 2 ist durch eine faltbare Klappe 8 verschließbar. Die Klappe 8 ist über einen Beschlag 9 mit dem Möbelkorpus 2 verbunden. Der Beschlag 9 umfasst einen Schwenkarm 10, der an einem Beschlaggehäuse 11 schwenkbar gelagert ist und mit einem Abschnitt der Klappe 8 fest verbunden ist.

Das Beschlaggehäuse 11 ist mittels vier Schraubelemente 14 in Form einer Senkkopfschraube mit der Seitenwand 3 verspannt. Es versteht sich, dass für alle hier beschriebenen Ausführungsformen auch andere Arten von Schrauben verwendet werden können, beispielsweise Schrauben mit Sechskant-, Trompeten- oder Zylinderkopf. Die Schrauben können insbesondere metrische Gewinde aufweisen. Zwei der vier Schraubelemente 14 liegen in der Querschnittsebene der Figur 2. Das Beschlaggehäuse 11 liegt dabei auf einer Innenseite 4 der Seitenwand 3 auf, die in Richtung des Inneren des Möbelkorpus 2 zeigt.

Das Beschlaggehäuse 11 weist Durchbrüche in Form von Durchgangsöffnungen 12 auf, durch die sich jeweils eines der Schraubelemente 14 erstreckt. Das Beschlaggehäuse 11 weist auf der der Seitenwand abgewandten Seite jeweils am Ende der Durchgangsöffnungen 12 einen Sitz für den Senkkopf der Schraubelemente 14 auf, sodass die Senkköpfe der Schraubelemente 14 überstandsfrei respektive bündig in dem Beschlaggehäuse 11 angeordnet sind. Das Schraubelement 14 respektive der Senkkopf ist insofern an dem Beschlaggehäuse 11 abgestützt.

Die Schraubelemente 14 weisen jeweils an dem dem Senkkopf gegenüberliegenden Ende ein Gewinde 15 auf, das in ein Gegengewinde 17 in der Seitenwand 3 eingreift.

Die Seitenwand 3 weist eine Ausnehmung 6 in Form einer Durchgangsbohrung auf, in die ein Gewindeelement 16 eingesetzt ist. Das Gewindeelement 16 ist im vorliegenden Fall als Gewindemuffe ausgeführt, die in die Ausnehmung 16 eingepresst oder eingeschlagen ist. Insofern kann das Gewindeelement ein glatte Außenkontur aufweisen.

Das Gewindeelement 16 ist zylindrisch ausgeführt und weist eine Länge auf, die im Wesentlichen der Breite der Seitenwand 3 im Querschnitt respektive der Dicke der Seitenwand 3 entspricht. Das Gewindeelemente 16 ist vollständig innerhalb der Ausnehmung 6 angeordnet. Das Gewindeelemente 16 schließt mit der Innenseite 4 der Seitenwand 3 bündig ab oder weist einen Abstand von der Innenseite 4 der Seitenwand 3 auf. Mit anderen Worten ist das Gewindeelement 16 überstandsfrei zu der Innenseite 4 angeordnet.

Das Gewindeelement 16 weist ein metallisches Innengewinde als Gegengewinde 17 auf. In das metallische Innengewinde des Gewindeelements 16 greift das als metallisches Außengewinde ausgeführte Gewinde 15 des Schraubelements 14 ein.

In Figur 3 ist der Querschnitt durch eine Seitenwand eines erfindungsgemäßes Möbels 1 in einer ersten Ausführungsform dargestellt. Die erste Ausführungsform des Möbels 1 unterscheidet sich von der Ausführungsform gemäß Figur 2 einerseits dadurch, dass die Seitenwand 3 auf der Innenseite 4 eine Aussparung 7 aufweist, in die der Beschlag 9 eingesetzt ist, und andererseits dadurch, dass das Gewindeelement 16 aus der Innenseite 4 der Seitenwand 3 in das Beschlaggehäuse 11 hineinragt.

Insofern wird bezüglich der Gemeinsamkeiten zwischen den beiden Ausführungsformen auf die Erläuterungen zu der Ausführungsform gemäß Figur 2 Bezug genommen. Gleiche respektive ähnliche Bauteile werden mit gleichen Bezugszeichen bezeichnet.

Das Gewindeelement 16 sitzt in einer als Durchgangsbohrung ausgeführten Ausnehmung 6 der Seitenwand 3 ein. Das Gewindeelement 16 weist eine Länge auf, die größer ist als die Dicke der Seitenwand 3 im Bereich der Ausnehmung 6. Das Gewindeelement 16 ist in der Ausnehmung 6 derart angeordnet, dass es überstandsfrei zu der Außenseite 5 der Seitenwand 3 angeordnet ist und aus der Innenseite 4 der Seitenwand 3 hinausragt. Mit anderen Worten durchdringt das Gewindeelement 16 die Innenseite 4 der Seitenwand 3. Das Gewindeelement 16 umfasst einen Passabschnitt 18, der aus der Seitenwand 3 in Richtung Beschlag 9 hinausragt.

Das Beschlaggehäuse 11 umfasst eine Passausnehmung 19, in die der Passabschnitt 18 des Gewindeelements 16 hineinragt. Die Passausnehmung 19 und der Passabschnitt 18 können derart ausgelegt sein, dass zwischen diesen eine leichte Spielpassung vorliegt.

Die Passausnehmung 19 ist koaxial zu der Durchgangsöffnungen 12 angeordnet und endet an einer kreisringförmigen Schulter. Der Passabschnitt 18 weist eine Länge auf, die geringer ist als die Länge der Passausnehmung 19. Hieraus resultiert, dass das Beschlaggehäuse 11 auf der Innenseite 4 der Seitenwand 3 aufliegt und somit unmittelbar mit dieser verspannt ist.

In Figur 3 liegt nur ein Schraubelement 14 respektive ein Gewindeelement 16 in der dargestellten Querschnittsebene. Es versteht sich, dass der Beschlag 9 mit einer beliebigen Anzahl an Schraubelementen 14 an der Seitenwand 3 befestigt respektive verspannt sein kann. Insbesondere können eins, zwei, drei, vier oder jede andere ganzzahligen Anzahl an Schraubelementen verwendet werden.

In Figur 4 ist der Querschnitt durch eine Seitenwand eines erfindungsgemäßes Möbels 1 in einer zweiten Ausführungsform dargestellt. Die zweite Ausführungsform des Möbels 1 unterscheidet sich von der ersten Ausführungsform einerseits dadurch, dass die Länge des Passabschnitts 18 des Gewindeelements 16 größer ist als die Länge der Passausnehmung 19 des Beschlaggehäuses 11 und andererseits dadurch, dass das ein zweites Gewindeelement 16' in einer als Sacklochbohrung ausgeführten Ausnehmung 6' angeordnet ist.

Insofern wird bezüglich der Gemeinsamkeiten zwischen den beiden Ausführungsformen auf die Erläuterungen zu den vorangehend erläuterten Ausführungsformen Bezug genommen. Gleiche respektive ähnliche Bauteile werden mit gleichen Bezugszeichen bezeichnet.

Die Länge des Passabschnitts 18 des Gewindeelements 16 ist größer als die Länge der Passausnehmung 19 des Beschlaggehäuses 11. Hierdurch liegt das Beschlaggehäuse 11 mit der kreisringförmigen Schulter auf dem Passabschnitt 18 des Gewindeelements 16 auf. Der Beschlag 9 ist insofern mittelbar über das Gewindeelement 16 mit der Seitenwand 3 verspannt. Zwischen dem Beschlaggehäuse 11 und der Innenseite 4 der Seitenwand 3 ist ein Spalt gebildet.

In der Schnittebene der Figur 4 ist ein zweites Gewindeelement 16' dargestellt, dass in einer als Sacklochbohrung ausgeführten Ausnehmung 6' angeordnet ist. Das zweite Gewindeelement 16' umfasst einen Passabschnitt 18', der aus der Innenseite 4 der Seitenwand 3 hinaus und in eine zweite Passausnehmung 19' des Beschlaggehäuses 11 hineinragt. Die Länge des zweiten Gewindeelements 16' ist dabei so gewählt, dass die Länge des Passabschnitts 18 des ersten Gewindeelements 16 gleich der Länge des Passabschnitts 18' des zweiten Gewindeelements 16' ist. Die Länge der ersten Passausnehmung 19 und die Länge der zweiten Passausnehmung 19' sind identisch. Insofern liegt das Beschlaggehäuse 11 im Bereich der zweiten Passausnehmung 19' mit der kreisringförmigen Schulter auf dem zweiten Gewindeelement 16 auf.

### Bezugszeichenliste

- 1: Möbel
- 2: Möbelkorpus
- 3: Seitenwand
- 4: Innenseite
- 5: Außenseite
- 6: Ausnehmung
- 7: Ausnehmung
- 8: Klappe
- 9: Beschlag
- 10: Schwenkarm
- 11: Beschlaggehäuse
- 12: Durchgangsöffnung
- 13: Gegengewinde
- 14: Schraubelement
- 15: Gewinde
- 16: Gewindeelement
- 17: Gegengewinde
- 18: Passabschnitt
- 19: Passausnehmung

## Patentansprüche

1. Möbel, umfassend:
einen Möbelkorpus (2),
ein bewegbares Möbelteil (8) und
einen Beschlag (9) zum Führen des bewegbaren Möbelteils (8), der an dem Möbelkorpus (2) befestigt ist und einen Schwenkarm (10) umfasst,
wobei der Schwenkarm (10) an einem Beschlaggehäuse (11) schwenkbar gelagert ist, und das Beschlaggehäuse (11) mit einer Seitenwand (3) des Möbelkorpus (2) über ein Schraubelement (14) befestigt ist, das an einem ersten Ende ein Gewinde (15) aufweist,
wobei das Gewinde (15) des Schraubelements (14) in ein metallisches Gegengewinde (13, 17) eines Gewindeelements (16) eingreift,
wobei das Beschlaggehäuse (11) auf einer Innenseite (4) des Möbelkorpus (2) angeordnet ist und eine Durchgangsöffnung (12) aufweist, und
wobei sich das Schraubelement (14) durch die Durchgangsöffnung (12) erstreckt und mit dem Gewinde (15) in das Gegengewinde (17) des Gewindeelements (16) eingreift sowie mit einem zweiten Ende, das dem ersten Ende entgegengesetzt ist, an dem Beschlaggehäuse (11) abgestützt ist,
wobei das Gewindeelement (16) in einem Durchbruch oder einer Ausnehmung (6) der Seitenwand (3) angeordnet ist,
**dadurch gekennzeichnet,**
**dass** das Gewindeelement (16) einen Passabschnitt (18) aufweist, der außerhalb des Durchbruchs respektive der Ausnehmung (6) angeordnet ist und von der Seitenwand (3) hervorsteht, und
**dass** das Beschlaggehäuse (11) eine koaxial zu der Durchgangsöffnung (12) angeordnete und an einer kreisringförmigen Schulter endende Passausnehmung (19) aufweist, in die
der Passabschnitt (18) des Gewindeelements (16) hineinragt, wobei das Gewindeelement (16) als Gewindemuffe ausgeführt ist, die in die Ausnehmung (6) eingepresst oder eingeschlagen ist.

## Claims

1. Furniture comprising:
a furniture body (2),
a movable furniture component (8) and
a fitting (9) for guiding the movable furniture component (8), which is secured to the furniture body (2) and comprises a pivoting arm (10),
wherein the pivoting arm (10) is pivotally mounted on a fitting housing (11), and
the fitting housing (11) is secured to a side wall (3) of the furniture body (2) via a screw element (14) which has a thread (15) at a first end,
wherein the thread (15) of the screw element (14) engages with a metallic mating thread (13, 17) of a threaded element (16),
wherein the fitting housing (11) is arranged on an inner side (4) of the furniture body (2) and has a through-opening (12), and
wherein the screw element (14) extends through the through-opening (12) and engages with its thread (15) in the mating thread (17) of the threaded element (16), and is supported against the fitting housing (11) by a second end opposite the first end,
wherein the threaded element (16) is arranged in a through-hole or recess (6) in the side wall (3),
**characterised in**
**that** the threaded element (16) comprises a seat section (18) which is arranged outside the through-hole or recess (6) and projects from the side wall (3), and
**that** the fitting housing (11) comprises a seat recess into which the seat section (18) of the threaded element (16) projects, wherein the threaded element (16) is designed as a threaded sleeve which is pressed or driven into the recess (6).

## Revendications

1. Meuble comprenant :
un corps de meuble (2),
une partie de meuble (8) pouvant être mobile et
une ferrure (9) pour guider la partie de meuble pouvant être mobile (8), qui est fixée au corps de meuble (2) et comprend un bras pivotant (10),
sachant que le bras pivotant (10) est logé pouvant pivoter sur un boîtier de ferrure (11) et le boîtier de ferrure (11) est fixé avec une paroi latérale (3) du corps de meuble (2) par le biais d'un élément vissable (14), qui comporte un filetage (15) à une première extrémité,
sachant que le filetage (15) de l'élément vissable (14) vient en prise dans un filetage opposé métallique (13, 17) d'un élément fileté (16),
sachant que le boîtier de ferrure (11) est disposé sur un côté intérieur (4) du corps de meuble (2) et comporte une ouverture de passage (12), et
sachant que l'élément vissable (14) s'étend à travers l'ouverture de passage (12) et vient en prise avec le filetage (15) dans le filetage opposé (17) de l'élément fileté (16) et est soutenu sur le boîtier de ferrure (11) avec une deuxième extrémité, qui est opposée à la première extrémité,
sachant que l'élément fileté (16) est disposé dans un passage ou un évidement (6) de la paroi latérale (3),
**caractérisé en ce que**
l'élément fileté (16) comporte une section d'ajustage (18), qui est disposée en dehors du passage ou plutôt évidement (6) et ressort de la paroi latérale (3), et
**en ce que** le boîtier de ferrure (11) comporte un évidement d'ajustage (19) disposé coaxialement par rapport à l'ouverture de passage (12) et terminant sur un épaulement de forme circulaire, dans lequel pénètre la section d'ajustage (18) de l'élément fileté (16), sachant que l'élément fileté (16) est exécuté sous la forme d'un manchon fileté, qui est enfoncé ou engagé dans l'évidement (6).
